# EUROPÄISCHE PATENTSCHRIFT

(11) **EP 0 592 772 B1**
(45) Veröffentlichungstag und Bekanntmachung des Hinweises auf die Patenterteilung: **03.12.1997**
(21) Anmeldenummer: 93110838.5
(22) Anmeldetag: 07.07.1993
(51) Int. Cl.: C13D 1/08, C13D 1/10, C13D 1/12

(54) **Extraktionsturm**
Extraction tower
Tour d'extraction

(30) Priorität: 07.10.1992 DE 4233680
(43) Veröffentlichungstag der Anmeldung: 20.04.1994
(73) Patentinhaber: Braunschweigische Maschinenbauanstalt AG, 38122 Braunschweig (DE)
(72) Erfinder: Matusch, Siegfried Ing. grad., D-38100 Braunschweig (DE)
(74) Vertreter: Gramm, Werner, Prof., Dipl.-Ing.

(56) Entgegenhaltungen:
- FR-A- 1 242 730
- FR-A- 1 474 615
- FR-A- 2 096 218
- FR-A- 2 197 631
- FR-A- 2 343 807

## Beschreibung

Die Erfindung betrifft einen Extraktionsturm zum Extrahieren von Schnitzeln, mit einem äußeren, auf seiner Innenwandung mit Aufhaltern (Leitflächen) und im Bodenbereich mit einem Bodensieb bestückten Turmmantel und einer zentralen, über ihre Länge mit Transportflügeln bestückten Rohrwelle, die an ihrem unteren Ende in einer Lagerung gehalten und an ihrem oberen Ende von einem Drehantrieb beaufschlagt ist, der mehrere Antriebseinheiten umfaßt, die um den Umfang der Rohrwelle verteilt angeordnet und mit dem Turmmantel verbunden sind und mit je einem Antriebsritzel in einen auf der Rohrwelle sitzenden Zahnkranz eingreifen.

Bei dieser vorbekannten Ausführungsform ist die Rohrwelle, deren Durchmesser z. B. halb so groß sein kann wie der des Turmmantels, mittig durch den Boden nach unten herausgeführt. In diesem Bereich ist eine Stopfbuchse vorgesehen; die komplette Rohrwelle stützt sich über eine Wälzlagerkombination auf einem Fundament ab. Der Drehantrieb der Rohrwelle umfaßt mehrere Getriebemotoren, die über spezielle Laufbahnen am Zahnkranz der Rohrwelle installiert sind.

Der Erfindung liegt die Aufgabe zugrunde, den eingangs beschriebenen Extraktionsturm hinsichtlich seiner Herstellungskosten zu verbessern.

Diese Aufgabe wird in Verbindung mit den eingangs beschriebenen Merkmalen erfindungsgemäß dadurch gelöst, daß die Rohrwelle an ihrem unteren Ende im Bereich des Bodensiebes mit einem zentrischen Zapfen mit Spiel in einem Gleitlager geführt ist, bis zu dem sich das Bodensieb erstreckt.

Stopfbuchse, Wälzlagerkombination und Fundament für die untere Lagerung der Rohrwelle werden somit erfindungsgemäß durch ein einfaches, preiswert herzustellendes Gleitlager ersetzt, das überdies verhältnismäßig großes Spiel aufweisen kann und somit leichte Pendelbewegungen der Rohrwelle zuläßt. Da die Lagerung des unteren Endes der Rohrwelle im Bereich des Bodensiebes nur einen verhältnismäßig kleinen zentrischen Zapfen geringen Durchmessers erfordert, kann das Bodensieb nunmehr bis an das Gleitlager herangezogen werden, erstreckt sich also über den größten Teil des Turmmanteldurchmessers. Aufgrund dieser starken Vergrößerung der Siebfläche gegenüber den vorbekannten Lösungen ist es möglich, die spezifische Bodensiebbelastung zu verringern und zugleich die teuren, bisher erforderlichen Seitensiebelemente im Bereich des Turmmantels ersatzlos wegfallenzulassen. Zugleich ist nunmehr die Möglichkeit gegeben, für eine zentrische Abstützung des Bodensiebes, die zugleich als zentrische Einpumpleitung für das Schnitzel-Saft-Gemisch ausgebildet sein kann.

Für die beschriebende Vergrößerung des Bodensiebes ist es zweckmäßig, wenn das untere Ende der Rohrwelle einen nach unten leicht konisch auslaufenden Boden aufweist.

Die eigentliche Lagerung der Rohrwelle erfolgt in ihrem oberen Bereich über ein Großlager. Dabei ist es vorteilhaft, wenn im oberen Ende des Turmmantels eine an diesem beweglich abgestützte Antriebsplattform vorgesehen ist, die mit den Antriebseinheiten bestückt ist und ein eine Kugeldrehverbindung bildendes Vierpunktlager aufweist, an dem das obere Ende der Rohrwelle gelagert ist. Bewegungen, die aufgrund von Fertigungstoleranzen in der Rohrwelle entstehen, werden somit vollständig auf die Antriebsplattform übertragen. Während des Betriebes gibt es hier somit keine Winkelfehler. Aufgrund der beweglichen Abstützung der Antriebsplattform in der äußeren Zarge des Turmmantels lassen sich Radial- und Axialbewegungen, also sogenannte Taumelbewegungen aufgrund von Fertigungstoleranzen, Wärmeausdehnungen o. dgl. ausgleichen.

Die einzelnen Antriebszweige sind erfindungsgemäß beweglich aufgehängt und können in Bezug auf Achsabstand und Fluchtung zum Zahnkranz exakt eingestellt werden. Hierzu ist es vorteilhaft, wenn die bewegliche Aufhängung einen in einer Horizontalebene verschwenkbaren Schwenkhebel umfaßt, der an seinem einen Ende am Außenrand der Antriebsplattform angelenkt ist und an seinem freien Ende eine Antriebseinheit trägt, wobei an dem freien Schwenkhebelende eine erste, an der Antriebsplattform angelenkte, längenveränderliche Gelenkstütze angreift, durch deren Längenjustierung eine bezogen auf die Antriebsplattform angenäherte radiale Verschwenkung der Antriebseinheit gegenüber dem Zahnkranz erfolgt.

Der Verschwenkhebel dient einmal zur Abstützung des Drehmomentes und ermöglicht im übrigen durch Längenveränderung der ersten Gelenkstütze eine Einstellung des Achsabstandes zwischen Antriebsritzel und Zahnkranz.

Um auch eine parallele Fluchtung des Antriebsritzels zum Zahnkranz einstellen zu können, ist es vorteilhaft, wenn die bewegliche Aufhängung eine zweite, längenveränderliche Gelenkstütze umfaßt, die mit ihrem einen Ende an der Antriebsplattform angelenkt ist (erster Anlenkpunkt) und mit ihrem anderen Ende axial ober- oder unterhalb des ersten Anlenkpunktes an der Antriebseinheit angreift.

Vorteilhaft ist ferner eine in die Rohrwelle geführte Rohrleitung zur Veränderung des Niveaus einer Wasserfüllung in der Rohrwelle. Bei den vorbekannten Konstruktionen war die Beeinflussung des Auftriebes durch Veränderung der Wasserfüllung nicht möglich, da ein zentraler Wellenzapfen mit anschließendem Armstern nach außen zur Rohrwellenwandung der Installation einer Rohrleitung entgegenstand.

Die bisher üblichen Seitensiebe und die dadurch erforderlichen Verstärkungen im äußeren Zargenbereich entfallen. Da das Bodensieb größer ausgeführt werden kann, ergibt sich in diesem Bereich eine größere Siebfläche als bisher, so daß der Fortfall der Seitensiebe damit ausgeglichen ist.

Der Vorteil der neuen Lagerung der Rohrwelle einschließlich des Antriebsaufbaus liegt vor allem in der größeren Betriebssicherheit des Systems. Derart große Bauwerke sind mit großen Fertigungstoleranzen behaftet. Thermische Einflüsse führen ebenfalls zur Veränderung der vorgegebenen Baumaße. Bei den heute üblichen Außenaufstellungen kann schon einseitig auftreffender Wind zu unterschiedlichen Ausdehnungen des Turmkörpers führen. Das neue System reagiert flexibel auf diese Einflüsse, ohne daß es zu unzulässig hohen Lagerkräften oder Veränderungen des Zahneingriffes kommt.

Weitere Merkmale der Erfindung sind Gegenstand der Unteransprüche und werden mit weiteren Vorteilen der Erfindung anhand eines Ausführungsbeispiels näher erläutert.

In der Zeichnung ist eine als Beispiel dienende Ausführungsform der Erfindung schematisch dargestellt. Es zeigen:
- Figur 1 -: im Längsschnitt einen Extraktionsturm;
- Figur 2 -: in vergrößertem Maßstab ein Detail der Figur 1;
- Figur 3 -: ein Detail der Figur 2 in Draufsicht;
- Figur 4 -: in noch einmal vergrößertem Maßstab eine Antriebseinheit und
- Figur 5 -: in Draufsicht eine Aufnahme für eine Antriebseinheit gemäß Figur 4.

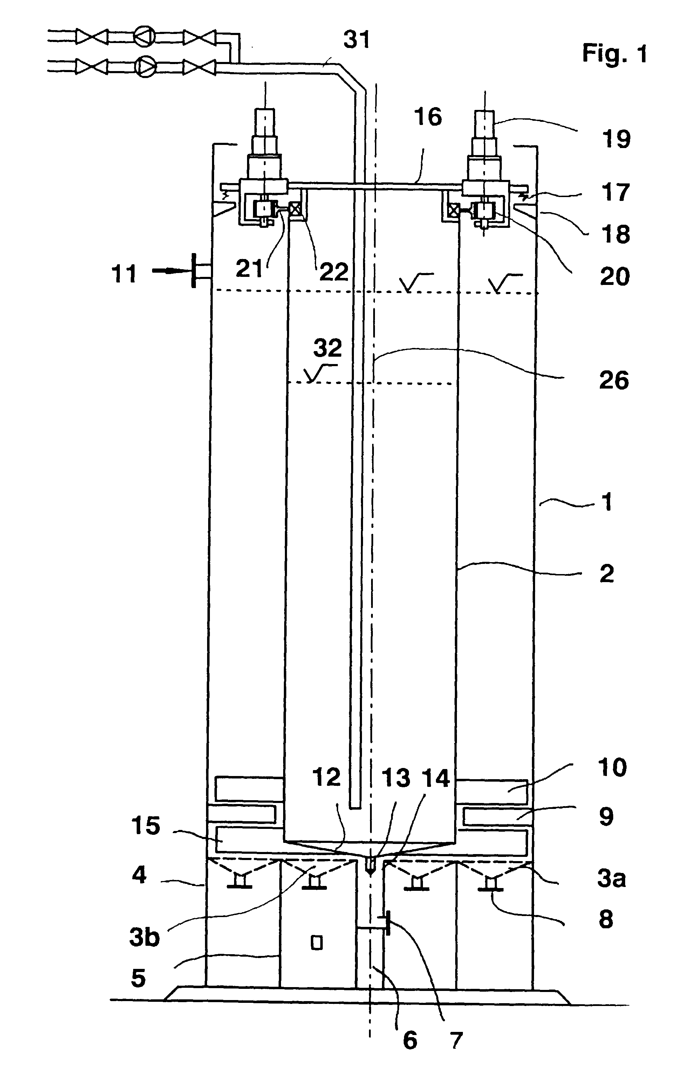

Der in Figur 1 dargestellte, zum Extrahieren von Schnitzeln dienende Extraktionsturm besteht im wesentlichen aus einem sich aus mehreren übereinander angeordneten Zargen zusammensetzenden Turmmantel 1 kreisrunden Querschnitts und einer konzentrisch innerhalb des Turmmantels 1 drehbar angeordneten Rohrwelle 2. In der unteren Zarge des Turmmantels 1 ist ein Bodensieb vorgesehen, das sich aus einem äußeren Ringbereich 3a und einem sich daran anschließenden inneren Ringbereich 3b zusammensetzt.

Die Abstützung des Bodensiebes 3 erfolgt über eine äußere Stehzarge 4, eine mittlere, zwischen den beiden Ringbereichen 3a, 3b vorgesehene Stehzarge 5 sowie ein zentrales Rohr 6, das zugleich als Einpumpleitung 7 für das Schnitzel-Saft-Gemisch ausgebildet ist. Die beiden Ringbereiche 3a, 3b des Bodensiebes 3 sind mit Ablaufstutzen 8 zur Rohsaftentnahme bestückt.

Die Innenwandung des Turmmantels 1 ist mit ggf. verstellbaren Leitflächen 9, sogenannten Aufhaltern bestückt, die mit Transportflügeln 10 zusammenwirken, mit denen die Rohrwelle 2 über den größten Teil ihrer Länge bestückt ist. Durch die Differenzbewegung zwischen den umlaufenden Transportflügeln 10 und den stationären Leitflächen 9 wird das unten durch die Einpumpleitung 7 oberhalb des Bodensiebes 3 eingepumpte Schnitzel-Saft-Gemisch innerhalb des Turmmantels 1 nach oben transportiert, während im oberen Turmbereich aufgegebenes Extraktionsfrischwasser 11 im Gegenstrom zur Schnitzelbewegung nach unten geführt und über das Bodensieb 3 bzw. dessen Ablaufstutzen 8 abgezogen wird. Die oben im Turm ankommenden ausgelaugten Schnitzel werden z. B. über nicht näher dargestellte Ausziehschnecken ausgeworfen.

Das untere Ende der Rohrwelle 2 weist einen nach unten leicht konisch auslaufenden Boden 12 auf, der mit einem nach unten ragenden zentrischen Zapfen 13 bestückt ist, der mit viel Spiel in einem als Fanglager ausgebildeten Gleitlager 14 geführt ist. Figur 1 läßt erkennen, daß sich das Bodensieb 3 vom Turmmantel 1 bis unmittelbar zum Gleitlager 14 erstreckt. Am unteren Ende der Rohrwelle 2 sitzen mit dieser umlaufende Verteiler 15 zur gleichmäßigen Verteilung des eingepumpten Schnitzel-Saft-Gemisches über dem Bodensieb 3.

Im oberen Ende des Turmmantels 1 ist eine Antriebsplattform 16 vorgesehen, die sich beweglich auf Auflagern 17 abstützt, die auf Konsolen 18 an der Innenwandung des Turmmantels 1 montiert sind. Die Beweglichkeit dieser Abstützung ist so gewählt, daß Radial- und Axialbewegungen (Taumelbewegungen) aufgrund von Fertigungstoleranzen, Wärmeausdehnungen und dgl. ausgeglichen werden können.

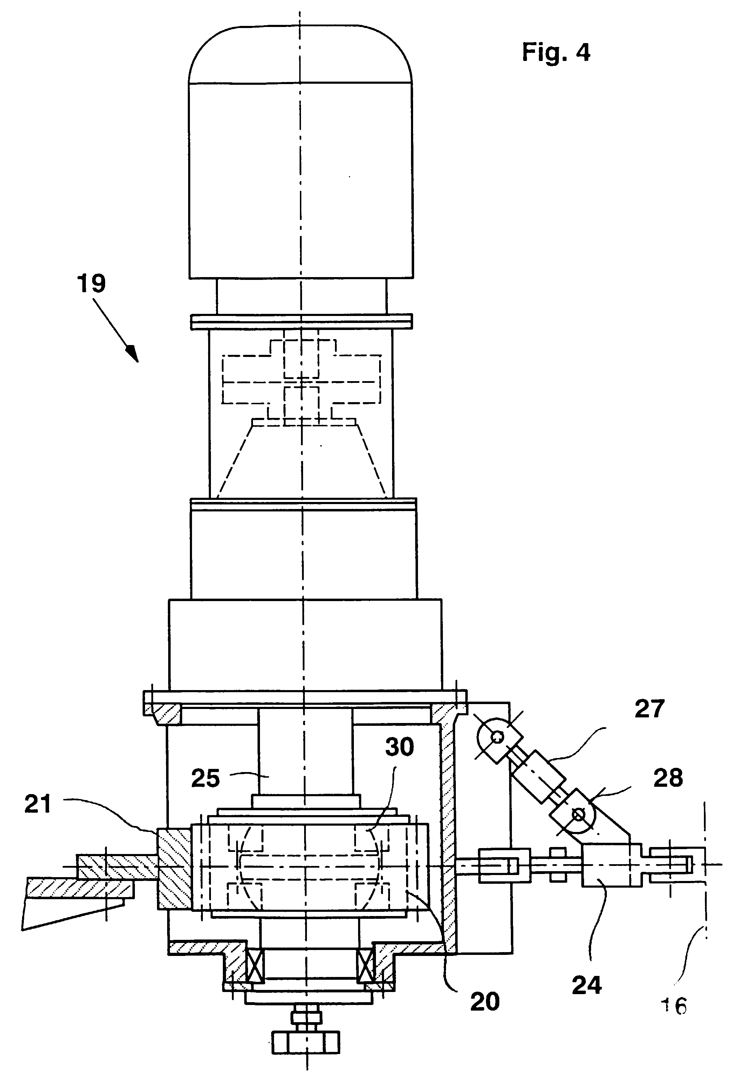

Der Drehantrieb für die Rohrwelle 2 umfaßt mehrere Antriebseinheiten 19, von denen eine insbesondere in Figur 4 zum Teil im Längsschnitt dargestellt ist. Um den Umfang der Rohrwelle 2 sind mehrere Antriebseinheiten 19 verteilt angeordnet, die mit jeweils einem Antriebsritzel 20 in einen auf der Rohrwelle 2 sitzenden Zahnkranz 21 eingreifen.

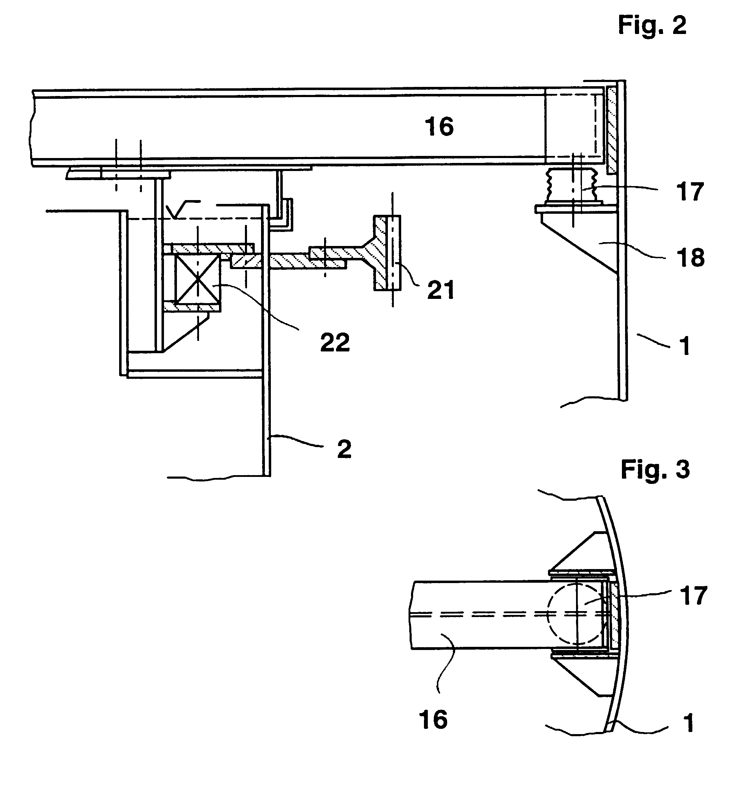

Die komplette Rohrwelle 2 ist in ihrem oberen Bereich über ein eine Kugeldrehverbindung bildendes Vierpunktlager 22 mit der Antriebsplattform 16 verbunden. Dadurch werden alle z. B. aufgrund von Fertigungstoleranzen in der Rohrwelle 2 entstehenden Bewegungen vollständig auf die Antriebsplattform 16 übertragen; während des Betriebes können hier also keine Winkelfehler entstehen. Figur 2 läßt erkennen, daß das Vierpunktlager 22 im Innenraum der Rohrwelle 2 liegt.

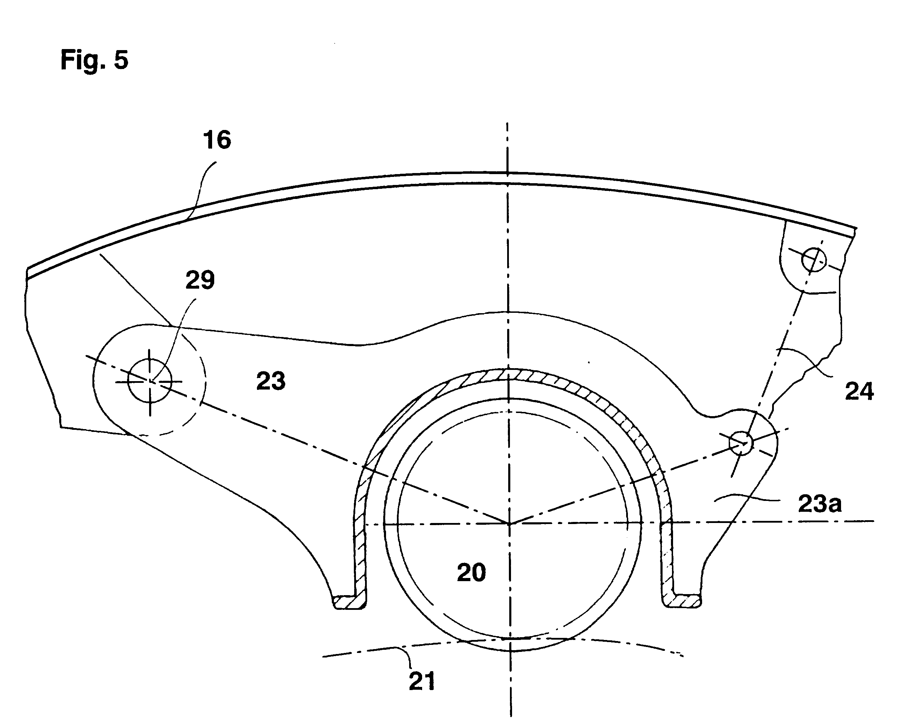

Jede Antriebseinheit 19 ist beweglich an der Antriebsplattform 16 angehängt. Hierfür ist ein in einer Horizontalebene verschwenkbarer Schwenkhebel 23 vorgesehen (s. Figur 5), der an seinem einen Ende am Außenrand der Antriebsplattform 16 angelenkt ist und an seinem freien, gabelförmig ausgebildeten Ende 23a eine Aufnahme für eine lotrecht anzuordnende Antriebseinheit 19 bildet. An diesem freien Schwenkhebelende 23a ist eine erste Gelenkstütze 24 angelenkt, die sich mit ihrem anderen Ende verschwenkbar an der Antriebsplattform 16 abstützt und längenveränderlich ausgebildet ist. Eine Längenveränderung dieser ersten Gelenkstütze 24 führt somit zu einer bezogen auf die Antriebsplattform 16 angenähert radialen Verschwenkung der zugeordneten Antriebseinheit 19 und dient somit zur Einstellung des Achsabstandes der Ritzelwelle 25 von der Drehachse 26 der Rohrwelle 2. Die bewegliche Aufhängung der Antriebseinheit 19 umfaßt eine zweite, ebenfalls längenveränderliche Gelenkstütze 27, die mit ihrem einen Ende an einem ersten Anlenkpunkt 28 an der Antriebsplattform 16 angelenkt ist und mit ihrem anderen Ende axial oberhalb des ersten Anlenkpunktes 28 an der Antriebseinheit 19 angreift. Durch eine Längenveränderung dieser zweiten Gelenkstütze 27 läßt sich das Antriebsritzel 20 in einer exakten parallelen Fluchtung zum Zahnkranz 21 einstellen.

Der Anlenkpunkt 29 des Schwenkhebels 23 am äußeren Randbereich der Antriebsplattform 16 bildet zugleich eine Abstützung des Drehmomentes.

Das Antriebsritzel 20 jeder Antriebseinheit 19 ist in einer Kugelkalotte 30 gelagert, wodurch geringfügige Ungenauigkeiten vom Antriebsritzel 20 selbst ausgeglichen werden können, dessen Tragbild auf dem Zahnkranz 21 somit nahezu 100 % beträgt.

Durch die Verwendung eines Großlagers besteht nunmehr die Möglichkeit, in die Rohrwelle 2 eine Rohrleitung 31 zu führen, über die sich das Niveau einer Wasserfüllung 32 in der Rohrwelle 2 verändern läßt. Durch Veränderung des Wasserniveaus, also durch Wasserzu- bzw. -abführung lassen sich durch den so eingestellten, auf die Rohrwelle 2 wirkenden Auftrieb eine Belastung des unteren Gleitlagers 14 sowie anderer Bauteile verhindern. Um die vorgegebene Last mit Richtung nach unten einstellen bzw. regeln zu können, ist es vorteilhaft, wenn sich die Antriebsplattform am Turmmantel über zwischengeschaltete Druckmeßdosen abstützt, deren Meßsignale die Befüllung der Rohrwelle steuern. Die Druckmeßdosen können hydraulisch oder elektrisch arbeiten und über ihre Meßsignale z. B. ein in der Rohrleitung 31 vorgesehenes Befüllventil steuern.

## Patentansprüche

1. Extraktionsturm zum Extrahieren von Schnitzeln, mit einem äußeren, auf seiner Innenwandung mit Aufhaltern (Leitflächen 9) und im Bodenbereich mit einem Bodensieb (3) bestückten Turmmantel (1) und einer zentralen, über ihre Länge mit Transportflügeln (10) bestückten Rohrwelle (2), die an ihrem unteren Ende in einer Lagerung (13, 14) gehalten und an ihrem oberen Ende von einem Drehantrieb (19, 20, 21) beaufschlagt ist, der mehrere Antriebseinheiten (19) umfaßt, die um den Umfang der Rohrwelle (2) verteilt angeordnet und mit dem Turmmantel (1) verbunden sind und mit je einem Antriebsritzel (20) in einen auf der Rohrwelle (2) sitzenden Zahnkranz (21) eingreifen, **dadurch gekennzeichnet, daß** die Rohrwelle (2) an ihrem unteren Ende im Bereich des Bodensiebes (3) mit einem zentrischen Zapfen (13) mit Spiel in einem Gleitlager (14) geführt ist, bis zu dem sich das Bodensieb (3) erstreckt.

2. Extraktionsturm nach Anspruch 1, gekennzeichnet durch eine zentrische Abstützung (6, 7) des Bodensiebes (3), die zugleich als zentrische Einpumpleitung (7) für das Schnitzel-Saft-Gemisch ausgebildet ist.

3. Extraktionsturm nach Anspruch 1 oder 2, gekennzeichnet durch einen äußeren und einen sich daran anschließenden inneren Bodensieb-Ringbereich (3a, 3b), zwischen denen zur Abstützung des Bodensiebes (3) eine Stehzarge (5) angeordnet ist.

4. Extraktionsturm nach Anspruch 1, 2 oder 3, dadurch gekennzeichnet, daß das untere Ende der Rohrwelle (2) einen nach unten leicht konisch auslaufenden Boden (12) aufweist.

5. Extraktionsturm nach einem der vorherigen Ansprüche, dadurch gekennzeichnet, daß im oberen Ende des Turmmantels (1) eine an diesem beweglich abgestützte Antriebsplattform (16) vorgesehen ist, die mit den Antriebseinheiten (19) bestückt ist und ein eine Kugeldrehverbindung bildendes Vierpunktlager (22) aufweist, an dem das obere Ende der Rohrwelle (2) gelagert ist.

6. Extraktionsturm nach Anspruch 5, dadurch gekennzeichnet, daß das Vierpunktlager (22) im Innenraum der Rohrwelle (2) liegt.

7. Extraktionsturm nach Anspruch 5 oder 6, dadurch gekennzeichnet, daß jede Antriebseinheit (19) beweglich an der Antriebsplattform (16) aufgehängt ist.

8. Extraktionsturm nach Anspruch 7, dadurch gekennzeichnet, daß die bewegliche Aufhängung einen in einer Horizontal-ebene verschwenkbaren Schwenkhebel (23) umfaßt, der an seinem einen Ende am Außenrand der Antriebsplattform (16) angelenkt (29) ist und an seinem freien Ende (23a) eine Antriebseinheit (19) trägt, wobei an dem freien Schwenkhebelende (23a) eine erste, an der Antriebsplattform (16) angelenkte, längenveränderliche Gelenkstütze (24) angreift, durch deren Längenjustierung eine bezogen auf die Antriebsplattform (16) angenäherte radiale Verschwenkung der Antriebseinheit (19) gegenüber dem Zahnkranz (21) erfolgt.

9. Extraktionsturm nach Anspruch 7 oder 8, dadurch gekennzeichnet, daß die bewegliche Aufhängung eine zweite, längenveränderliche Gelenkstütze (27) umfaßt, die mit ihrem einen Ende an der Antriebsplattform (16) angelenkt ist (erster Anlenkpunkt 28) und mit ihrem anderen Ende axial ober- oder unterhalb des ersten Anlenkpunktes (28) an der Antriebseinheit (19) angreift.

10. Extraktionsturm nach einem der vorherigen Ansprüche, dadurch gekennzeichnet, daß das Antriebsritzel (20) jeder Antriebseinheit (19) in einer Kugelkalotte (30) gelagert ist.

11. Extraktionsturm nach einem der vorherigen Ansprüche, gekennzeichnet durch eine in die Rohrwelle (2) geführte Rohrleitung (31) zur Veränderung des Niveaus einer Wasserfüllung (32) in der Rohrwelle (2).

12. Extraktionsturm nach den Ansprüchen 5 und 11, dadurch gekennzeichnet, daß sich die Antriebsplattform (16) am Turmmantel (1) über zwischengeschaltete Druckmeßdosen abstützt, deren Meßsignale die Befüllung der Rohrwelle (2) steuern.

## Claims

1. Extraction tower for leaching pulp, having an outer tower casing (1), which is equipped on its inner wall with arresters (deflecting surfaces 9) and in the region of the base with a base screen (3), and a central tubular shaft (2) which is equipped over its length with transporting vanes (10), is held in a mounting (13, 14) at its lower end and is acted upon at its upper end by a rotary drive (19, 20, 21) which comprises a number of drive units (19) which are disposed so as to be distributed round the periphery of the tubular shaft (2), are connected to the tower casing (1) and engage, with one drive pinion (20) in each case, in a toothed rim (21) seated on the tubular shaft (2), **characterised in that** the tubular shaft (2) is guided with clearance, at its lower end in the region of the base screen (3), with a central journal (13) in a plain bearing (14), the base screen (3) extending as far as the latter.

2. Extraction tower according to claim 1, characterised by a central supporting system (6, 7) for the base screen (3), which supporting system is, at the same time, constructed as a central pumping-in line (7) for the pulp/juice mixture.

3. Extraction tower according to claim 1 or 2, characterised by an outer and, adjoining the latter, an inner base screen annular region (3a, 3b), between which annular regions a vertical frame (5) is disposed for supporting the base screen (3).

4. Extraction tower according to claim 1, 2 or 3, characterised in that the lower end of the tubular shaft (2) has a base (12) which tapers off downwards in a slightly conical manner.

5. Extraction tower according to one of the preceding claims, characterised in that there is provided, in the upper end of the tower casing (1), a drive platform (16) which is supported in a movable manner on the said casing, is equipped with the drive units (19) and has a four-point bearing (22) which forms a ball-type rotating connection and on which the upper end of the tubular shaft (2) is mounted.

6. Extraction tower according to claim 5, characterised in that the four-point bearing (22) is located in the interior of the tubular shaft (2).

7. Extraction tower according to claim 5 or 6, characterised in that each drive unit (19) is suspended on the drive platform (16) in a movable manner.

8. Extraction tower according to claim 7, characterised in that the movable suspension system comprises a rocking lever (23) which can be tilted in a horizontal plane, is articulatingly mounted (29) at one of its ends on the outer edge of the drive platform (16) and carries a drive unit (19) at its free end (23a), the free end (23a) of the rocking lever being acted upon by a first joint support (24) of variable length which is articulatingly mounted on the drive platform (16) and adjustment of the length of which results in a tilting, which is approximately radial referred to the drive platform (16), of the drive unit (19) in relation to the toothed rim (21).

9. Extraction tower according to claim 7 or 8, characterised in that the movable suspension system comprises a second joint support (27) of variable length which is articulatingly mounted by one of its ends on the drive platform (16) (first point of articulation 28) and acts with its other end upon the drive unit (19) axially above or below the first point of articulation (28).

10. Extraction tower according to one of the preceding claims, characterised in that the drive pinion (20) of each drive unit (19) is mounted in a spherical segment (30).

11. Extraction tower according to one of the preceding claims, characterised by a pipeline (31), which is run into the tubular shaft (2), for changing the level of a charge of water (32) in the said tubular shaft (2).

12. Extraction tower according to claims 5 and 11, characterised in that the drive platform (16) is supported on the tower casing (1) via interposed pressure-measuring cells, the measuring signals of which control the filling of the tubular shaft (2).

## Revendications

1. Tour d'extraction pour l'extraction de pulpes, comportant une enveloppe extérieure de tour (1), équipée sur sa paroi intérieure de dispositifs de retenue (surfaces de guidage 9) et dans la région de sa base d'un tamis de pied (3), et un arbre tubulaire central (2) équipé de pales de transport (10) réparties sur sa longueur, qui est maintenu à son extrémité inférieure dans un palier (13, 14) et qui est placé, à son extrémité supérieure, sous l'action d'un entraînement de rotation (19, 20, 21) qui comporte plusieurs unités d'entraînement (19) qui sont réparties à la périphérie de l'arbre tubulaire (2), sont reliées à l'enveloppe de la tour (1), et s'engagent chacune par un pignon d'entraînement (20) sur une couronne dentée (21) disposée sur l'arbre tubulaire (2), caractérisée en ce que dans la région du tamis de pied (3), l'arbre tubulaire (2) est doté à son extrémité inférieure d'un tourillon central (13) qui est guidé avec un jeu dans un palier coulissant (14) jusqu'auquel s'étend le tamis de pied (3).

2. Tour d'extraction selon la revendication 1, caractérisée par un appui central (6, 7) du tamis de pied (3) qui est en même temps configuré comme conduite centrale de pompage (7) pour le mélange de pulpe et de jus.

3. Tour d'extraction selon les revendications 1 ou 2, caractérisée par une région annulaire extérieure (3a) de tamis de pied et une région annulaire intérieure (3b) de tamis de pied qui s'y raccorde, entre lesquelles un bâti de pose (5) est disposé pour soutenir le tamis de pied (3).

4. Tour d'extraction selon les revendications 1, 2 ou 3, caractérisée en ce que l'extrémité inférieure de l'arbre tubulaire (2) présente un fond (12) débordant légèrement vers le bas en forme de cône.

5. Tour d'extraction selon l'une des revendications précédentes, caractérisée en ce qu'à l'extrémité supérieure de l'enveloppe de la tour (1) est prévue une plate-forme d'entraînement (16) qui s'appuie sur l'enveloppe de manière mobile, qui est équipée des unités d'entraînement (19) et qui présente un appui à quatre points (22) formant une liaison à rotation sphérique et sur lequel est montée l'extrémité supérieure de l'arbre tubulaire (2).

6. Tour d'extraction selon la revendication 5, caractérisée en ce que l'appui à quatre points (22) est disposé dans l'espace intérieur de l'arbre tubulaire (2).

7. Tour d'extraction selon les revendications 5 ou 6, caractérisée en ce que chaque unité d'entraînement (19) est suspendue de manière mobile à la plate-forme d'entraînement (16).

8. Tour d'extraction selon la revendication 7, caractérisée en ce que la suspension mobile comporte un levier pivotant (23) qui peut être incliné dans un plan horizontal, qui est articulé à l'une de ses extrémités sur le bord extérieur de la plate-forme d'entraînement (16) et qui porte à son extrémité libre (23a) une unité d'entraînement (19), et sur l'extrémité libre (23a) du levier pivotant s'engage un premier appui pivotant (24) de longueur modifiable, articulé sur la plate-forme d'entraînement (16), dont l'ajustement en longueur réalise une inclinaison de l'unité d'entraînement (19) par rapport à la couronne dentée (21), laquelle inclinaison est approximativement axiale par rapport à la plate-forme d'entraînement (16).

9. Tour d'extraction selon les revendications 7 ou 8, caractérisée en ce que la suspension mobile comporte un deuxième appui articulé (27) de longueur modifiable, qui est articulé par une de ses extrémités à la plate-forme d'entraînement (16) (premier point d'articulation 28) et qui s'engage par son autre extrémité sur l'unité d'entraînement (19), au-dessus ou en dessous du premier point d'articulation (28) dans la direction axiale.

10. Tour d'extraction selon l'une des revendications précédentes, caractérisée en ce que le pignon d'entraînement (20) de chaque unité d'entraînement (19) est monté dans une calotte sphérique (30).

11. Tour d'extraction selon l'une des revendications précédentes, caractérisée par une conduite tubulaire (31) guidée dans l'arbre tubulaire (2), pour la modification du niveau d'un remplissage d'eau (32) de l'arbre tubulaire (2).

12. Tour d'extraction selon les revendications 5 et 11, caractérisée en ce que la plate-forme d'entraînement (16) s'appuie sur l'enveloppe de la tour (1) par l'intermédiaire de cellules de mesure de pression intercalées dont les signaux de mesure commandent le remplissage de l'arbre tubulaire (2).
